# EUROPEAN PATENT APPLICATION

(11) **EP 2 031 239 A2**
(43) Date of publication of application: **04.03.2009**
(21) Application number: 08014516.2
(22) Date of filing: 14.08.2008
(51) Int. Cl.: F02N 15/02

(54) **Torque transmission apparatus for starting vehicle engine**

(30) Priority: 31.08.2007 JP 2007226708
(71) Applicant: DENSO CORPORATION, Kariya-city, Aichi-pref. 448-8661 (JP)
(72) Inventor: Murata, Mitsuhiro, Aichi-pref., 448-8661 (JP)
(74) Representative: Kuhnen & Wacker

(57) **Abstract**

The torque transmission apparatus includes a first rotor (3) fixed to a crankshaft of an engine, a second rotor (5) rotatable relative to the first rotor and permanently engaged with a pinion gear of a starter, and a clutch (6) located between the first and second rotors. The first and second rotors are disposed side by side, the first rotor being formed with a pressure-insertion hole (3b), the second rotor being formed with a recess to house the clutch. The clutch is constituted by an outer (13) fixed to the first rotor, an inner (14) integrally formed with the second rotor, and an engaging member (15) located between the outer and the inner. The outer is integrally formed with a pressure-inserting portion (13a) extending towards the first rotor. An outer periphery of the pressure-inserting portion (13a) is pressure-fitted to an inner periphery of the pressure-insertion hole (3b) of the first rotor with a certain fitting interference therebetween.

## Description

### BACKGROUND OF THE INVENTION

### 1. Field of the Invention

The present invention relates to a torque transmission apparatus for transmitting driving torque generated by a starter to a crankshaft of a vehicle engine to start the engine.

### 2. Description of Related Art

Recently, an idle stop system which automatically stops an engine of a vehicle, when, for example, the vehicle stops for a red light at an intersection, has been in practical use as a measure against exhaust emission which is assumed to be one of the causes of global warming. Japanese Patent Application Laid-open No. 2000-274337 describes a torque transmission apparatus for use in such a system. This torque transmission apparatus includes a ring gear with a one-way clutch. The ring gear is rotatably supported by a flywheel through a bearing, the flywheel being mounted to a crankshaft of a vehicle engine, and is permanently engaged with a pinion gear of a starter.

The clutch included in the ring gear is put in a coupled state to allow torque transmission from the ring gear to the flywheel, when the driving torque of the starter is transmitted from the pinion gear to the ring gear, that is, when the engine is started. On the other hand, the clutch is put in an idling state to inhibit torque transmission from the flywheel to the ring gear, when the flywheel is driven to rotate by the engine, that is, when the rotational speed of the flywheel exceeds that of the ring gear.

However, the above torque transmission apparatus has a problem in that, since an outer (outer ring) of the clutch is directly formed in the flywheel, it is necessary to manufacture various different outers for various different flywheels depending on engine types. Accordingly, since a number of variations of outers have to be prepared, the manufacturing cost increases. In addition, generally, in order to increase the strength and wear resistance of an outer of a clutch, the outer has to be subjected to heat treatment. Accordingly, when a flywheel formed with the clutch is not subjected to heat treatment, it is necessary to subject the flywheel to an anti-carburizing process. Hence, there has been difficulty in manufacturing outer-integrated type flywheels.

Furthermore, the outer of the clutch receives load from engaging members of the clutch such as rollers and sprags located in the outer and inner, and as a result, deforms towards its outer circumference, when the ring gear is driven to rotate by the starter, that is, when torque is transmitted from the ring gear to the flywheel. This deformation of the outer may cause grease filled in the clutch to leak to the outside. In addition, if the engaging members tilt due to the deformation of the outer, they may be applied with a load, and as a result, they may be deformed.

### SUMMARY OF THE INVENTION

The present invention provides a torque transmission apparatus located between a crankshaft of an engine and a starter to transmit driving torque generated by the starter to the crankshaft to start the engine comprising:
a first rotor fixed to the crankshaft so as to be rotatable together with the crankshaft;
a second rotor located so as to be rotatable relative to the first rotor and permanently engaged with a pinion gear of the starter; and
a clutch located between the first and second rotors, and being configured to allow torque transmission from the second rotor to the first rotor when the second rotor is driven to rotate by the starter and inhibit torque transmission from the first rotor to the second rotor when the first rotor is driven to rotate by the engine;
the first and second rotors being disposed side by side with a certain clearance therebetween, the first rotor being formed with a pressure-insertion hole at a side thereof opposed to the second rotor, the second rotor being formed with a recess to house the clutch at a side thereof opposed to the first rotor,
the clutch being constituted by an outer fixed to the first rotor so as to be rotatable together with the first rotor, an inner integrally formed with the second rotor so as to be rotatable together with the second rotor, and an engaging member located between the outer and the inner and operating to couple the outer and the inner to each other, and decouple the outer and the inner from each other,
the outer being integrally formed with a pressure-inserting portion extending towards the first rotor, an outer periphery of the pressure-inserting portion being pressure-fitted to an inner periphery of the pressure-insertion hole of the first rotor with a certain fitting interference therebetween.

According to the present invention, it is possible to provide at low cost a torque transmission apparatus for starting a vehicle engine, in which an outer of a clutch thereof can be prevented from being deformed when torque generated by a starter is transmitted to a crankshaft of the engine.

Other advantages and features of the invention will become apparent from the following description including the drawings and claims.

### BRIEF DESCRIPTION OF THE DRAWINGS

In the accompanying drawings:
Fig. 1 is a partial cross-sectional view of a torque transmission apparatus for starting a vehicle engine according to an embodiment of the invention;
Fig. 2 is a half cross-sectional view of a first rotor included in the torque transmission apparatus;
Fig. 3 is a half cross-sectional view of a second rotor included in the torque transmission apparatus; and
Fig. 4 is a partial cross-sectional views of the torque transmission apparatus and a starter engaged with the torque transmission apparatus through a pinion gear thereof.

### PREFERRED EMBODIMENTS OF THE INVENTION

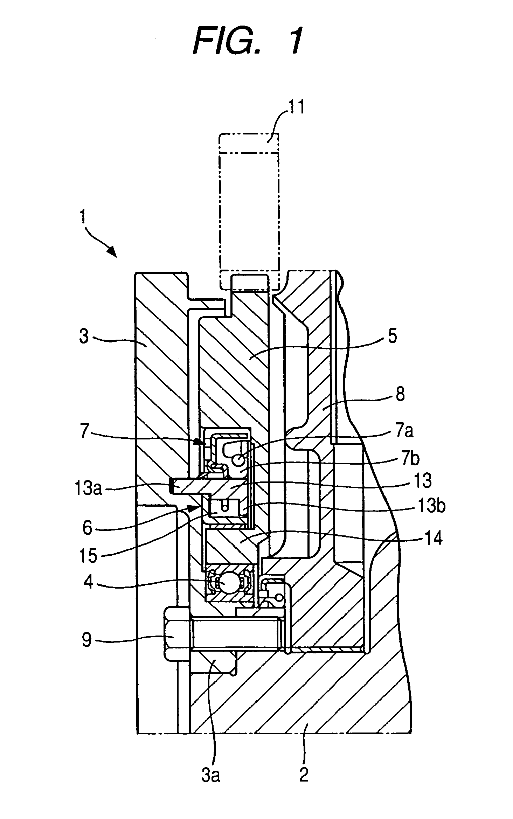

Fig. 1 is a partial cross-sectional view of a torque transmission apparatus 1 for starting a vehicle engine according to an embodiment of the invention. As shown in Fig. 1, the torque transmission apparatus 1 is constituted mainly by a first rotor 3 which rotates together with a crankshaft 2 of a vehicle engine (not shown), a second rotor 5 supported by a bearing 4 so as to be rotatable with respect to the first rotor 3, a clutch 6 disposed between the first and second rotors 3 and 5, and a seal member 7 provided for preventing grease as lubricant filled in the clutch 6 from leaking to the outside.

The torque transmission apparatus 1 is used, for example, for an engine auto stop/start system which controls stop and restart of a vehicle engine. This system operates to stop an engine of a vehicle when the vehicle has stopped for a red light at an intersection, or for a traffic jam, and thereafter automatically restarts the engine in response to a predetermined driver's operation (for example, when the driver releases brake pedal). This system is generally called as "idling stop system", or "eco-run system".

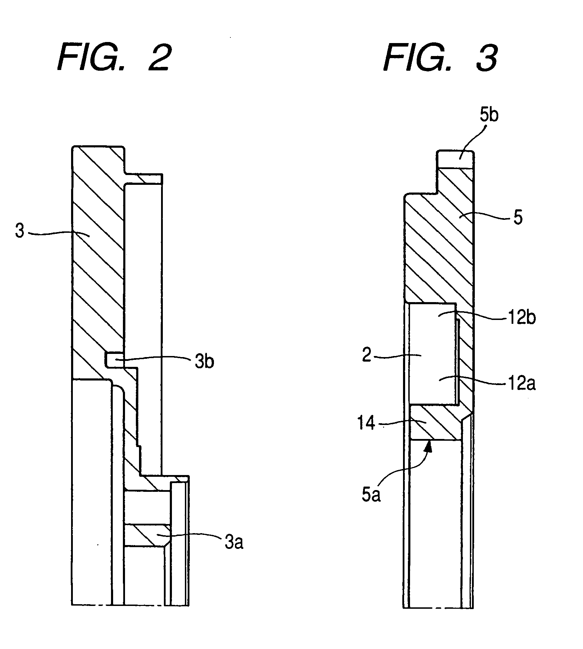

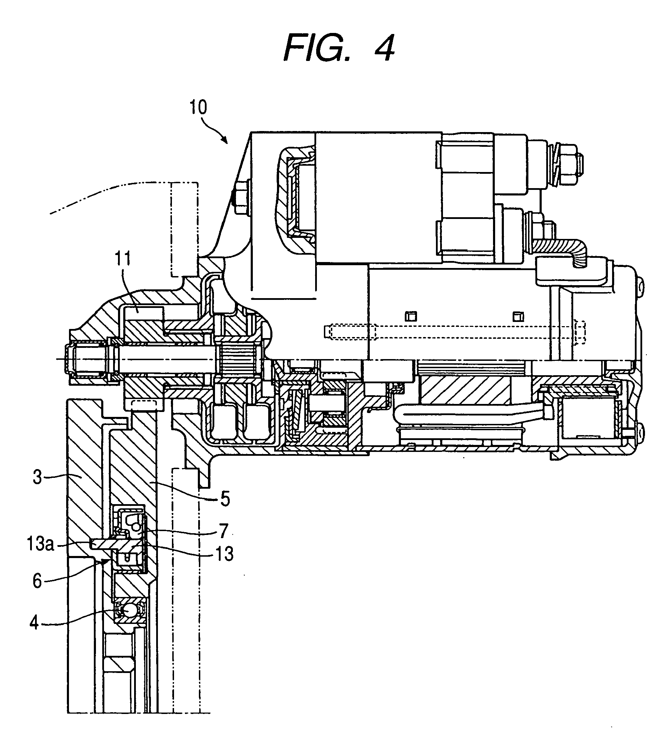

The first rotor 3 is a flywheel of a MT vehicle, or a drive plate of an AT vehicle, for example. The first rotor 3 is formed with a ring-like boss 3a in a radially center portion thereof, the boss 3a being fixed to an end portion of the crankshaft 2 protruding from an engine block 8 by bolts 9. The second rotor 5, which has a ring shape with a circular hole 5a (see Fig. 3) opening to a radially center portion thereof, is a ring gear formed with teeth 5b along the whole rim thereof, and permanently engaged with a pinion gear 11 of a starter 10 as shown in Fig. 4. The inner diameter of the circular hole 5a of the second rotor 5 is larger than the outer diameter of the ring-like boss 3a of the first rotor 3. Between the outer periphery of the boss 3a and the inner periphery of the circular hole 5a, the bearing 4 (which may be a sealed ball bearing) is located. Since the structure and operation of the starter 10 are well known, the explanations thereof are omitted.

As shown in Fig. 2, the first rotor 3 is formed with a pressure-insertion hole 3b at a side axially opposed to the first rotor 5. As shown in Fig. 3, the second rotor 5 is formed with a recess 12 at a side axially opposed to the first rotor 3. In the recess 12, there are provided a clutch space 12a to locate the clutch 6, and a seal space 12b to locate the seal member 7 at a position radially outside the clutch 6. The clutch 6 is constituted mainly by an outer 13 fixed to the first rotor 3, an inner 14 provided in the second rotor 5, and engaging member 15. The engaging member, which may be constituted by sprags, cams and rollers, operates to permit and inhibit torque transmission between the outer 13 and the inner 14.

The outer 13 is integrally formed with a pressure-inserting portion 13a extending towards the first rotor 3. The outer periphery of the pressure-inserting portion 13a is pressure-fitted to the inner periphery of the pressure-insertion hole 3b with a certain interference therebetween. The outer periphery of the outer 13 serves as a sealing surface which is in slide contact with the seal member 7. This sealing surface and the outer periphery of the pressure-inserting portion 13a are flush with each other. The outer 13 is further integrally formed with a sidewall portion 13b bending towards the inner periphery thereof at an end thereof opposite to the pressure-inserting portion 13a.

The inner 14 is integrally provided in the radially inner periphery of the recess 12 of the second rotor 5 (see Fig. 3). The engaging member 15, which may be constituted by sprags, cams, and rollers, operate to permit and inhibit torque transmission between the outer 13 and the inner 14. In more detail, when the second rotor 5 is driven to rotate by the starter 10. that is, when the engine is started, the engaging member 15 permits torque transmission from the second rotor 5 to the first rotor 3. On the other hand, when the first rotor 3 is driven to rotate by the engine, that is, when the rotational speed of the first rotor 3 exceeds that of the second rotor 5, the engaging member 15 inhibits torque transmission from the first rotor 3 to the second rotor 5.

As shown in Fig. 1, the seal member 7, which may be an oil seal including therein a ring-like spring 7a, is pressure-fitted in the seal space 12b (the space located radially outside the outer 13) of the recess 12 formed in the second rotor 5 so as to be unrotatable with respect to the second rotor 5. The seal member 7 includes a lip portion made of rubber receiving a clamping force of the spring 7a. The lip portion 7b is pushed against the outer periphery of the outer 13, so that it slides on the outer periphery of the outer 13 when the first and second rotors rotate relative to each other, to thereby prevent leakage of grease from the outer 13 side. The bearing 4 prevents leakage of grease from the inner 14 side.

Next, the operation of the torque transmission apparatus 1 having the above described structure is explained.

### a) When the engine is started:

When the driving torque generated by the starter 10 is transmitted from the pinion gear 11 to the second rotor 5, the clutch 6 is put in a coupled state (a state in which the outer 13 and the inner 14 are coupled to each other through the engaging member 15), and accordingly the driving torque is transmitted in the order of second rotor 5 → clutch 6 → first rotor 3 → crankshaft 2.

### b) After the engine is started up:

When the engine starts combustion, and the first rotor 3 is driven to rotate by the crankshaft 2 at a speed higher than that of the second rotor 5, the clutch 6 is put in an idling state (a state in which the outer 13 and the inner 14 are decoupled from each other). As a result, since torque transmission from the first rotor 3 to the second rotor 5 is inhibited, the starter 10 can be prevented from being driven by the engine.

The above described embodiment of the invention provides the following advantages. In this embodiment, the outer 13 is manufactured separately from the first rotor 3. The pressure-inserting portion 13a integrally formed with the outer 13 is pressure-fitted in the pressure-insertion hole 3b formed in the first rotor 3. At this time, since the outer periphery of the pressure-inserting portion 13a is pressure-fitted to the inner periphery of the pressure-insertion hole 3b with a certain fitting interference therebetween, when the clutch 6 transmits torque, that is, when the driving torque generated by the starter 10 is transmitted to the crankshaft 2, the outer 13 can be prevented from being deformed towards the outer periphery thereof by the load applied from the engaging member 15. In addition, since the pressure-inserting portion 13a formed integrally with the outer 13 is pressure-inserted into the pressure-insertion hole 3b formed in the first rotor 3, compression stress occurs in the whole of the outer 13 including the pressure-inserting portion 13a, as a result of which the strength of the outer 13 increases. Therefore, it becomes possible to thin the wall of the outer 13, and accordingly to make the clutch 6 compact in size and light in weight.

The outer 13 is manufactured separately from the first rotor 3. Accordingly, the outer 13 can be subjected to heat treatment alone in order to increase the strength and wear resistance thereof, before the outer 13 is fixed to the first rotor 3. This makes it possible to eliminate the need to perform an anti-carburizing process or the like on the first rotor 3 when it is not necessary to perform any heat treatment on the first rotor 3. According to this embodiment, it is not necessary to manufacture various kinds of flywheels integrated with the outer 13. This eliminates the need of preparing a number of variations of outers, as a result of which manufacturing cost can be lowered.

The outer 13 is formed integrally with the sidewall portion 13b which bends towards the inner periphery at an end thereof opposite to the pressure inserting portion 13b. This sidewall portion 13b serves as a reinforcing member. Accordingly, it is possible to prevent a portion of the outer 13 on the side opposite to the pressure-inserting portion from being deformed to have a trumpet-shaped opening due to the load applied from the engaging member 15. As a result, leakage of the grease filled in the clutch 6, and deformation of the engaging member 15 can be prevented, and accordingly the torque transmission can be performed stably and reliably.

In this embodiment, since the seal member 17 is located at the outer periphery of the outer 13, the outer periphery of the outer 13 serves as a sealing surface. The sealing surface (the outer periphery of the outer 13) and the outer periphery of the pressure-inserting portion 13a are flush with each other, the torque transmission apparatus 1 of this embodiment can be manufactured with ease and at low cost as explained below. If the outer periphery of the outer 13 and the outer periphery of the pressure-inserting portion 13a are not flush with each other, and there is a step therebetween, centering accuracy of the sealing surface may be lowered, and as a result, the fitting interference of the sealing member 7 (oil seal, for example) located at the outer periphery of the outer 13 may become unstable to thereby degrade the sealing performance. As explained above, in this embodiment, there is no step between the outer periphery of the outer 13 and the outer periphery of the pressure-inserting portion 13a, centering of the sealing surface (the outer periphery of the outer 13) can be performed with a high degree of accuracy in a state of the pressure-inserting portion 13a being pressure-inserted in the pressure-insertion hole 3b. This makes the fitting interference of the seal member 7 stable, to thereby provide a reliable sealing structure, and to reduce torque loss.

### Variant

The above described embodiment describes an example in which an oil seal is used as the seal member 7, however, a bearing with sealing function may be used as the seal member 7.

The above explained preferred embodiments are exemplary of the invention of the present application which is described solely by the claims appended below. It should be understood that modifications of the preferred embodiments may be made as would occur to one of skill in the art.

## Claims

1. A torque transmission apparatus located between a crankshaft of a vehicle engine and a starter to transmit driving torque generated by said starter to said crankshaft to start said engine comprising:
a first rotor fixed to said crankshaft so as to be rotatable together with said crankshaft;
a second rotor located so as to be rotatable relative to said first rotor and permanently engaged with a pinion gear of said starter; and
a clutch located between said first and second rotors, and being configured to allow torque transmission from said second rotor to said first rotor when said second rotor is driven to rotate by said starter and inhibit torque transmission from said first rotor to said second rotor when said first rotor is driven to rotate by said engine;
said first and second rotors being disposed side by side with a certain clearance therebetween, said first rotor being formed with a pressure-insertion hole at a side thereof opposed to said second rotor, said second rotor being formed with a recess to house said clutch at a side thereof opposed to said first rotor,
said clutch being constituted by an outer fixed to said first rotor so as to be rotatable together with said first rotor, an inner integrally formed with said second rotor so as to be rotatable together with said second rotor, and an engaging member located between said outer and said inner and operating to couple said outer and said inner to each other, and decouple said outer and said inner from each other,
said outer being integrally formed with a pressure-inserting portion extending towards said first rotor, an outer periphery of said pressure-inserting portion being pressure-fitted to an inner periphery of said pressure-insertion hole of said first rotor with a certain fitting interference therebetween.

2. The torque transmission apparatus according to claim 1, wherein said recess formed in said second rotor includes a seal space located radially outside said outer, a sealing member for preventing lubricant filled in said clutch from leaking out of said clutch being disposed in said seal space, an outer periphery of said outer being in slide contact with said seal member and flush with said outer periphery of said pressure-inserting portion.

3. The torque transmission apparatus according to claim 2, wherein said seal member is a sealed bearing.

4. The torque transmission apparatus according to claim 1, wherein said outer is integrally formed with a sidewall portion bending towards an inner periphery thereof at an end portion thereof opposite to said pressure-inserting portion.
